Europäisches Patentamt

European Patent Office

Office européen des brevets

(11) Veröffentlichungsnummer: **0 223 303**
**A1**

## (12) EUROPÄISCHE PATENTANMELDUNG

(21) Anmeldenummer: **86201990.8**

(22) Anmeldetag: **13.11.86**

(51) Int. Cl.⁴: **C04B 41/90** , //H01C1/14

(30) Priorität: **15.11.85 NL 8503142**

(43) Veröffentlichungstag der Anmeldung:
**27.05.87 Patentblatt 87/22**

(84) Benannte Vertragsstaaten:
**BE CH DE FR GB IT LI**

(71) Anmelder: **N.V. Philips' Gloeilampenfabrieken
Groenewoudseweg 1
NL-5621 BA Eindhoven(NL)**

(72) Erfinder: **Belhomme, Charles Joseph Ghislain
p/A INT. OCTROOIBUREAU B.V. Prof.
Holstlaan 6
NL-5656 AA Eindhoven(NL)**

(74) Vertreter: **Auwerda, Cornelis Petrus et al
INTERNATIONAAL OCTROOIBUREAU B.V.
Prof. Holstlaan 6
NL-5656 AA Eindhoven(NL)**

(54) **N-leitendes keramisches elektrisches Element mit Kontaktschichten.**

(57) Keramisches, elektrisches N-leitendes Element mit Kontaktschichten mit ohmschem Leitungsverhalten, wobei die Kontaktschichten aus mindestens zwei Teilschichten bestehen, von denen die an die keramische Oberfläche grenzende Schicht eine aufgedampfte Schicht mit reduzierenden Eigenschaften ist. Insbesondere bei keramischen Körpern mit einer mechanisch bearbeiteten Oberfläche, beispielsweise mit einer geschliffenen Oberfläche, treten Schwierigkeiten in bezug auf die Lebensdauer, insbesondere beim Aufenthalt in einer feuchtwarmen Atmosphäre auf. Die Stabilität wird wesentlich verbessert, wenn die Schicht, die an die Schicht mit reduzierenden Eigenschaften grenzt die folgende Zusammensetzung aufweist:
ein glasartiges Bindemittel 10-25 Gew.%
Aluminiumteilchen ≥ 5 Gew.%
Silberteilchen ≤ 50 Gew.%.

EP 0 223 303 A1

## "N-leitendes keramisches elektrisches Element mit Kontaktschichten".

Die Erfindung bezieht sich auf ein keramisches elektrisches Element, das N-leitend ist und mit Kontaktschichten mit ohmschem Leitungsverhalten versehen ist.

Um ein ohmsches Leitungsverhalten eines Kontaktes auf N-leitendem keramischem Material zu erhalten, ist es notwendung, dass mindestens diejenige Schicht, die an dieses Material grenzt, aus einem Metall mit reduzierenden Eigenschaften besteht.

Dies ist beispielsweise in der US-PS 3.027.529 beschrieben, in der eine derartige Schicht verwendet wird und die mit einer galvanisch aufgetragenen bzw. einer aufgebrannten Schicht verstärkt ist, die aus Kupfer, Silber oder aus einer Legierung dieser Metalle auf der dünnen aufgedampften Schicht eines Metalles mit reduzierenden Eigenschaften, wie Aluminium, besteht. An die äussere Schicht muss normalerweise die Anforderung einer guten Lötbarkeit gestellt werden.

Für bestimmte Anwendungsbereiche muss die keramische Oberfläche eine mechanische Bearbeitung erfahren, wie eine Schleif-, Polier-oder Sägebearbeitung und es hat sich nun herausgestellt, dass ein derartiges auf bekannte Weise mit Kontraktschichten versehenes Element bei einer Betriebstemperatur von 350°C oder höher eine unzureichende Stabilität aufweist. Ausserdem stellt es sich heraus, dass derartige Elemente eine Dauerprobe in feuchtwarmer Luft (40°C -90% Luftfeuchtigkeit) nicht stehen.

Die Erfindung schafft nun ein keramisches elektrisches Element, das N-leitend und mit Kontaktschichten mit ohmschem Leitungsverhalten versehen ist.

Nach der Erfindung ist das Element der obengenannten Art dadurch gekennzeichnet, dass die Schicht, die an die durch Aufdampfen angebrachte Schicht mit reduzierenden Eigenschaften grenzt, aus einem Gemisch der nachfolgenden Zusammensetzung in Gewichtsprozenten besteht:

ein glasartiges Bindemittel 10-25 Gew.%
Aluminiumteilchen ≥ 5 Gew.%
Silberteilchen ≤ 50 Gew.%

Das Element, das diesem Kennzeichen entspricht, kann einen wiederholten Aufenthalt bei einer Betriebstemperatur von sogar 450°C durchaus bestehen, ebenso wie die obengenannte Feuchtwärmeprobe.

Das Vorhandensein von Silber in der oberen Schicht der Kontaktschichten nach der Erfindung ist nicht notwendig, wenn es sich um Resistenz derjenigen Teile handelt, die eine mechanisch bearbeitete Oberfläche aufweisen. Wesentlich ist, dass die Schicht mit reduzierenden Eigenschaften durch Aufdampfen angebracht wird.

Für manche Anwendungsbereiche eines N-leitenden keramischen Elementes werden an die Verschleissfestigkeit der Kontaktschichten jedoch höhere Anforderungen gestellt als normalerweise üblich ist. Dies ist u.a. der Fall bei einer Motorsicherungsanordnung die aus einem Widerstand mit einem positiven Temperaturkoeffizienten des Widerstandes besteht, wobei die Kontaktoberfläche bei jedem Einschaltvorgang des Motors von einem beweglichen Kontakt berührt wird.

Nach einer bevorzugten Ausführungsform der Erfindung, die sich insbesondere auf Anwendungsbereiche mit besonderen Anforderungen in bezug auf die Verschleissfestigkeit der Kontaktschichten des Elementes richtet, ist das Element dadurch gekennzeichnet, dass die Schicht, die an die Schicht mit reduzierenden Eigenschaften grenzt, die folgende Zusammensetzung in Gew.% aufweist:

ein glasartiges Bindemittel 10-25 Gew.%
Aluminiumteilchen ≥ 5 Gew.%
Silberteilchen 20-50 Gew.%

Als glasartiges Bindemittel kann jede Zusammensetzung verwendet werden, sofern das Glas keine oxidierenden Bestandteile aufweist und die Erweichungstemperatur unterhalb etwa 650°C liegt. In der Paste, die als Ausgangserzeugnis zum Anbringen der Kontaktschichten verwendet wird, wird das Glas in Form einer gemahlenen Fritte mit einer Teilchengrösse von beispielsweise 10 μm verwendet und auch die verwendeten Metallteilchen haben beispielsweise diese Grösse.

Geeignete Glaszusammensetzungen sind beispielsweise:

| | | | | |
|---|---|---|---|---|
| PbO | 36,0 Gew.% | 74,0 Gew.% | 53,5 Gew.% | 44,4 Gew.% |
| BaO | -Gew.% | -Gew.% | 18,3 Gew.% | -Gew.% |
| $SiO_2$ | 20,6 Gew.% | 18,6 Gew.% | 20,2 Gew.% | 26,1 Gew.% |
| SrO | -Gew.% | -Gew.% | -Gew.% | 20,5 Gew.% |

B$_2$O$_3$ 5,0 Gew.% 5,0 Gew.% 5,4 Gew.% 6,1 Gew.%

Al$_2$O$_3$ 2,4 Gew.% 2,4 Gew.% 2,6 Gew.% 2,9 Gew.%

Bi$_2$O$_3$ 36,0 Gew.% -Gew.% -Gew.% -Gew.%

und auch andere bekannte in der sogenannten Dickfilmtechnoligie verwendete Gläser sind verwendbar.

Die Rolle des glasartigen Bindemittels ist diese, dass die natürliche Oxidschicht, die auf den Aluminiumteilchen vorhanden ist, sich darin löst, so dass das Metall frei wird.

Zum Anbringen der Paste wird diese mit einem vorübergehenden Bindemittel zubereitet, das beim Brennen verflüchtigt und/oder verbrennt. Ein derartiges Bindemittel wird hinzugegeben, damit die Paste die geeigneten rheologischen Eigenschaften aufweist. Ein Beispiel eines derartigen Bindemittels ist ein Gemisch aus Benzylbenzoat und Äthylzellulose oder eine Lösung von Äthylzellulose in einem Gemisch aus Butanol-1-und Butylkarbitolacetat.

Anhand zweier Ausführungsbeispiele wird die Erfindungs näher erläutert.


Beispiel 1:

Die Eigenschaften einiger Kontaktschichten auf N-leitendem BaTiO$_3$ und zwar:

a) eine Kombination einer im Vakuum aufgedampften Schicht mit einer Dicke von 0,1 μm aus NiCr in einem Atomverhältnis 80:20, einer aufgedampften Silberschicht von 0,3 μm und einer bekannten Silberpaste, die im Siebdruckverfahren in einer Dicke von 5-10 μm auf der aufgedampften Silberschicht angebracht wird und wonach das Ganze 5 Minuten lang bei 450°C gebrannt wird,

b) eine Kombination aus einer im Siebdruckverfahren in Form einer Paste aufgetragenen In-Ga-Ag-Schicht die 14,7-15,0 Gew.% In, 3,65-3,75 Gew.% Ga, 73,5-75,2 Gew.% Ag und 6 bis 8% eines Emailpulvers aufweist und einer ebenfalls im Siebdruckverfahren darauf aufgetragenen Ag-Paste mit einer Dicke von 5-10 μm, wobei nach dem Auftragen der ersten Schicht während 20 Minuten bei 620°C gebrannt wird und das Ganze nach dem Anbringen der zweiten Schicht 10 Minuten lang bei 620°C gebrannt wird;

c) eine Kombination einer im Siebdruckverfahren aufgetragenen In-Ga-Ag-Schicht derselben Zusammensetzung und ebenfalls während 20 Mintuen bei 620°C gebrannt und einer Schicht mit einer Dicke von 5-10 μm aus einer Al-Paste, die in der Trockensubstanz etwa 20 Gew.% Glaspulver und 80% Al-Pulver aufweist, wonach das Ganze 20 Minuten lang bei 620°C gebrannt wird,

werden mit vier Kontaktschichtkombinationen nach der Erfindung verglichen und zwar mit den folgenden Kombinationen:

d) einer im Vakuum aufgedampften Aluminiumschicht mit einer Dicke von 2 μm, auf der eine Siebdruckschicht mit einer Dicke von 5-10 μm einer Al-Paste, die in der Trockensubstanz etwa 20 Gew.% Glaspulver und 80% Al-Pulver aufweist, wonach das Ganze 20 Minuten lang bei 650°C gebrannt wird,

e) einer Kombination einer im Vakuum aufgedampften Schicht mit einer Dicke von 0,1 μm aus NiCr im Atomverhältnis 80:20, einer aufgedampften Silberschicht von 0,3 μm und darauf einer Siebdruckschicht einer Al-Paste mit derselben Dicke und Zusammensetzung wie d), wonach das Ganze ebenfalls 20 Minuten lang bei 650°C gebrannt wird,

f) entsprechend d) mit der Ausnahme, dass die Schicht der Al-Paste nicht im Siebdruckverfahren sondern im Spritzvorgang angebracht wird,

g) entsprechend e) mit der Ausnahme, dass die Schicht aus Al-Paste nicht im Siebdruckverfahren sondern im Spritzvorgang angebracht wird.

In der untenstehenden Tabelle wird eine Übersicht der erhaltenen Eigenschaften angegeben und zwar die Qualität des ohmschen Kontaktes, die Stabilität in bezug auf die Dauerprobe in feuchter Luft von 40°C mit 90% Luftfeuchtigkeit und die Stabilität beim Aufenthalt bei einer Anzahl Temperaturen.

Die Ergebnisse sind durch die untenstehenden Bezeichnungen angegeben:

+ + sehr gut

+ gut

+ -akzeptierbar

-schlecht

--sehr schlecht

Tabelle:

| Kontakt-schichten Komb. | Ohmscher Kontakt | Stabilität in feucht-warmer Luft | Stabilität bei einem Aufenthalt bei den folgenden Temperaturen in °C | | | | | |
|---|---|---|---|---|---|---|---|---|
| | | | 200 | 250 | 300 | 350 | 400 | 450 |
| a | +- | ++ | ++ | + | +- | -- | -- | -- |
| b | +- | -- | ++ | ++ | ++ | + | -- | -- |
| c | +- | -- | ++ | ++ | ++ | + | -- | -- |
| d | ++ | ++ | ++ | ++ | ++ | ++ | ++ | ++ |
| e | ++ | ++ | ++ | ++ | ++ | ++ | ++ | ++ |
| f | ++ | ++ | ++ | ++ | ++ | ++ | ++ | ++ |
| g | ++ | ++ | ++ | ++ | ++ | ++ | ++ | ++ |

Die Verschleissfestigkeiteigenschaften werden durch eine Anzahl Kombinationen der Schichten auf der Oberfläche aus N-leitendem BaTiO$_3$ bestimmt:

a) eine im Vakuum aufgedampften Kombination aus NiCr (80:20) mit einer Dicke von 0,1 μm und einer darauf angebrachten Silberschicht mit einer Dicke von 0,3 μm und einer Al-Paste, die 20% Glas und 80% Al enthält im Siebdruckverfahren mit einer Dicke von 40 μm auf der aufgedampften Kombination angebracht,

b) dieselbe aufgedampfte Kombination wie bei a), auf der eine Paste im Siebdruckverfahren angebracht ist, die im anorganischen Stoff 47 Gew.% Ag und 5,5 Gew.% Al und einen restlichen Teil an Glasfritte aufweist,

c) dieselbe aufgedampfte Kombination wie bei a), auf der im Siebdruckverfahren eine Paste angebracht ist, die im anorganischen Stoff 35 Gew.% Al und den Rest an Glas aufweist.

Der mechanische Verschleiss wurde mittels der nachfolgenden Dauerprobe getestet. Ein einfacher Stift eines sogenannten Motoranlasskontaktes wird über einen Abstand von 0,5 mm mit einer Frequenz von 16 x/Minute hin und her bewegt. Der Druck des Federkontaktes beträgt etwa 3 N. Das ganze Gefüge wird vertikal aufgestellt, damit der gebildete Staub entweichen kann. Als Mass für die Verschleissfestigkeit wird der Zeitverlauf gemessen, wobei Unterbrechung des durch das N-leitende BaTiO$_3$, einem Widerstand mit positivem Temperaturkoeffizienten, gesteuerten Stromes auftritt.

Bei dem Kontakt a) tritt eine Unterbrechung nach 40 Minuten auf, bei b) nach 25 Stunden und bei c) sogar erst nach 100 bis 400 Stunden.

Andere Zusammensetzungen der im Rahmen der Erfindung verwendbaren Al-Ag-Pasten sind:
Ag23, Al 40 Gew.%, Rest Glas (an anorganischem Stoff)
Ag 55,5 Al 16,6 Gew.%, Rest Glas (an anorganischem Stoff).

Die letztgenannte Zusammensetzung wird beispielsweise in der untenstehenden Form angebracht:
Ag 40,0 Gew.%
Al 12,0 Gew.%
Glasfritte 20,0 Gew.% (beispielsweise Zusammensetzung 3 wie obenstehend spezifiziert)
28,0 Gew.% einer Lösung eines organischen Bindemittels in einem organischen Lösungsmittel.

**Ansprüche**

1. Keramisches elektrisches Element, das N-leitend und mit Kontaktschichten mit ohmschem Leitungsverhalten versehen ist, wobei die Kontaktschichten aus mindestens zwei Teilschichten bestehen, von denen die an die keramische Oberfläche grenzende Schicht reduzierende Eigenschaften aufweist, und durch Aufdampfen angebracht ist, dadurch gekennzeichnet, dass die Schicht, die an die Schicht mit reduzierenden Eigenschaften grenzt, aus einem Gemisch der folgenden Zusammensetzung besteht:

4

ein glasartiges Bindemittel 10-25 Gew.%
Aluminiumteilchen ≥ 5 Gew.%
Silberteilchen ≤ 50 Gew.%.

2. Keramisches elektrisches Element nach Anspruch 1, dadurch gekennzeichnet, dass die Schicht, die an die Schicht mit reduzierenden Eigenschaften grenzt, die folgende Zusammensetzung aufweist:
ein glasartiges Bindemittel 10-25 Gew.%
Aluminiumteilchen ≥ 5 Gew.%
Silberteilchen 20-50 Gew.%.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 547 835  (D.A. SHORT)<br>* Patentanspruch 1; Spalte 4, Zeilen 6-49 *<br><br>--- | 1 | C 04 B   41/90 //<br>H 01 C    1/14 |
| Y | DE-A-1 490 271  (SIEMENS AG)<br>* Patentanspruch 1 *<br><br>--- | 1 | |
| A | GB-A-1 151 648  (NATIONAL LEAD CO.)<br>* Patentansprüche 1,8,12 *<br><br>--- | 1 | |
| A | 28th ELECTRONIC COMPONENTS CONFERENCE, Anaheim, 24th-26th April 1978, Seiten 80-84, The Institute of Electrical and Electronics Engineers, Inc, New York, US; S.M. MARCUS et al.: "Solderable low contact resistance metallizations for PTC thermistors"<br>* Seite 81, rechte Spalte *<br><br>--- | 1 | |
| | | | RECHERCHIERTE SACHGEBIETE (Int. Cl.4)<br><br>C 04 B<br>H 01 C<br>H 01 G |
| A | FR-A-2 380 627  (MATSUSHITA ELECTRIC INDUSTRIAL CO., LTD)<br>* Patentansprüche 1,5,10 *<br><br>--- | 1 | |
| A,D | US-A-3 027 529  (R. SCHÖFER et al.)<br>* Patentanspruch 1; Spalte 4, Zeilen 6-17 *<br><br>----- | 1 | |

Der vorliegende Recherchenbericht wurde für alle Patentansprüche erstellt.

| Recherchenort | Abschlußdatum der Recherche | Prüfer |
|---|---|---|
| DEN HAAG | 19-02-1987 | DECANNIERE L.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82